# EUROPEAN PATENT SPECIFICATION

(11) **EP 3 279 250 B1**
(45) Date of publication and mention of the grant of the patent: **31.07.2019**
(21) Application number: 16773137.1
(22) Date of filing: 31.03.2016
(51) Int. Cl.: C08L 7/00, C08K 5/3415, C08K 5/39, C08L 9/00, F16F 15/08

(54) **VIBRATION-ABSORBING MEMBER**
SCHWINGUNGSISOLIERENDES GLIED
ÉLÉMENT D'ABSORPTION DE VIBRATIONS

(30) Priority: 01.04.2015 JP 2015074941
(43) Date of publication of application: 07.02.2018
(73) Proprietor: Bridgestone Corporation, Tokyo 104-8340 (JP)
(72) Inventor: NISHIMURA, Keiji, Tokyo 104-8340 (JP)
(74) Representative: Oxley, Robin John George
(86) International application number: PCT/JP2016/060715
(87) International publication number: WO 2016/159257

(56) References cited:
- JP-A- H01 278 543
- JP-A- 2001 049 033
- JP-B2- 2 897 836
- US-A- 3 904 592
- US-A1- 2002 180 078
- US-A1- 2006 217 468
- US-A1- 2007 142 509
- US-A1- 2007 142 509

## Description

### TECHNICAL FIELD

The present invention relates to a vibration-absorbing member comprising a rubber composition suitable for automotive use. More particularly, the present invention relates to a heat-resistant vibration-absorbing member comprising a rubber composition that can be conveniently used at high temperature sites such as of torsional dampers, engine mounts, and muffler hangers of automobiles.

### BACKGROUND ART

For the purpose of absorbing engine drive vibrations and preventing noises therefrom, torsional dampers, engine mounts, and muffler hangers have been hitherto used in automobiles and various vehicles, for which vibration-absorbing rubbers are in use as their constituent material. The vibration-absorbing rubber used in such applications should have a good damping performance, a good heat resistance, good durability, good rubber physical properties such as hardness, strength, and elongation, good dynamic characteristics such as a dynamic magnification (or a low dynamic magnification) and a good balance of these characteristics.

Especially, the vibration-absorbing rubber has been increasingly required to be imparted with a heat resistance in association with a recent increasing demand of automobiles in thermally harsh environments. As to the engine mount, the temperature in an engine room increases owing to the reduction in size of the engine room, so that the requirement for the heat resistance becomes more severe. Most of vibration-absorbing rubber members make use, as a main component, of natural rubber or a diene rubber such as butadiene rubber, which shows good vibration-absorbing properties. However, although these rubbers are excellent in vibration-absorbing properties, a problem resides in that their heat resistance is inferior to rubbers including chloroprene rubber (CR) and ethylene propylene rubber (EPDM).

The requirement indices for the heat resistance include a change in elongation at break, a compression set property, and a change in static spring. Of these, the known technique of improving the changes in static spring and the compression set property is one in which a bismaleimide serving as a crosslinking agent is formulated in rubber and a thiazole vulcanization accelerator, or a thiuram vulcanization accelerator is used in combination. For example, the related art literature indicated below is submitted.

In JP-A 2005-194501, there is described a vibration-absorbing rubber composition in which a bismaleimide serving as a vulcanizing agent is formulated in natural rubber and/or a diene synthetic rubber and is used in combination with a thiazole vulcanization accelerator or a thiuram vulcanization accelerator.

However, the vibration-absorbing rubber composition with the above formulation is not yet satisfactory in response to the requirement of improving such a heat resistance that requirement characteristics will be severely pursued more and more in the future. Moreover, it has been demanded to find out a formulation of a vibration-absorbing rubber composition capable of improving a change in hardness and a compression set property.

### PRIOR ART DOCUMENT

### PATENT DOCUMENT

Patent Document 1: JP-A 2005-194501

### SUMMARY OF THE INVENTION

### PROBLEMS TO BE SOLVED BY THE INVENTION

The present invention has been made under such circumstances as described above and has for its object the provision of a vibration-absorbing member which is improved in change of static spring and a compression set property and is excellent in heat resistance while maintaining fundamental physical properties such as a low dynamic magnification and tensile physical properties (elongation and strength).

### MEANS FOR SOLVING THE PROBLEMS

The present inventor has made intensive studies so as to achieve the above object and, as a result, found that when a bismaleimide and a specific type of dithiocarbamic acid metal salt vulcanization accelerator are used in combination and formulated in natural rubber and a blend of natural rubber and a diene synthetic rubber, a hardness change and a compression set property can be adequately improved. Especially, it has been found that when a dithiocarbamic acid metal salt having a benzene ring is formulated in the rubber composition, the above improving effect can be increased.

Accordingly, the present invention provides the following vibration-absorbing member comprising a rubber composition.
[1] A vibration-absorbing member, characterized by including a rubber composition, a metal, and an adhesive as constituent elements, wherein the rubber composition includes a rubber component containing, as a main component, natural rubber or a blend of natural rubber and a diene synthetic rubber, a bismaleimide, and a dithiocarbamic acid metal salt having a benzene ring.
[2] The vibration-absorbing member as recited in [1], in which the rubber component is entirely made of natural rubber.
[3] The vibration-absorbing member as recited in [1], in which the blend of natural rubber and a diene synthetic rubber is used as a main component and a formulation weight ratio (A)/(B) of the natural rubber (A) and the diene synthetic rubber (B) is from 90/10 to 40/60.
[4] The vibration-absorbing member as recited in [1], [2], or [3], in which the dithiocarbamic acid metal salt having a benzene ring is a dibenzyldithiocarbamic acid zinc salt or an N-ethyl-N-phenyldithiocarbamic acid zinc salt.
[5] The vibration-absorbing member as recited in any one of [1] to [4], in which an amount of the bismaleimide is from 0.2 to 10 parts by weight per 100 parts by weight of the rubber component.
[6] The vibration-absorbing member as recited in any one of [1] to [5], in which an amount of the dithiocarbamic acid metal salt is from 0.2 to 5 parts by weight per 100 parts by weight of the rubber composition.
[7] The vibration-absorbing member as recited in any one of [1] to [6], further including sulfur in the vibration-absorbing rubber composition.
[8] The vibration-absorbing member as recited in any one of [1] to [7], in which an amount of the dithiocarbamic acid metal salt is from 0.5 to 2.0 parts by weight per 100 parts by weight of the rubber composition.

### ADVANTAGEOUS EFFECTS OF THE INVENTION

According to the vibration-absorbing rubber composition used in the present invention, a static spring change and a compression set property can be improved while maintaining fundamental characteristics such as a low dynamic magnification and strength characteristics (hardness, tensile elongation, and tensile strength) and thus, the composition is useful as a vibration-absorbing member whose heat resistance is severely required such as for an engine mount.

### EMBODIMENT FOR CARRYING OUT THE INVENTION

The vibration-absorbing rubber composition used in the present invention is now described in more detail.

The vibration-absorbing rubber composition used in the present invention includes a rubber component whose main component is made of natural rubber (NR), or a blend of natural rubber and a diene rubber.

The natural rubber (NR) is not specifically limited in type and a known one can be used by appropriate selection. For example, mention is made of ribbed smoked sheets (RSS) and technically specified rubber (TSR).

In the practice of the present invention, the above diene rubber is one which contains double bonds in the main chain and in which a diene monomer is used as a starting monomer. More particularly, mention is made of isoprene rubber (IR), butadiene rubber (BR), styrene-butadiene rubber (SBR), and acrylonitrile-butadiene rubber (NBR), which can be used singly or in admixture of at least two kinds selected therefrom. In the present invention, butadiene rubber (BR) and styrene-butadiene rubber (SBR) can be preferably used.

The above polybutadiene rubber (BR) is one which is obtained by homopolymerizing 1,3-butadiene monomer and is not one obtained by polymerization with other monomer. The above polybutadiene rubber (BR) is one obtained by solution polymerization in a hydrocarbon solvent by use of a metal catalyst such as Ni, Co, or Nd or an organometal compound catalyst and which is completely different in constitution unit and preparation technique from styrene-butadiene rubber (SBR) described hereinafter.

As the above polybutadiene (BR), a preferred polybutadiene (BR) is a high cis polybutadiene rubber (BR) whose cis-1,4-bond content is at least 95 %. For example, commercial products of "BR01" manufactured by JSR Corporation, and "150L" manufacture by Ube Industries, Ltd., can be adopted.

The styrene-butadiene rubber (SBR) is formed by copolymerization of styrene and 1,3-butadiene, and particularly, is a copolymer obtained by emulsion polymerization between styrene and 1,3-butadiene. The acrylonitrile-butadiene rubber (NBR) is a copolymer obtained by emulsion polymerization between acrylonitrile and 1,3-butadiene. Although there is a hydrogenated nitrile rubber (HNBR) in which the double bonds of the butadiene units in the acrylonitrile-butadiene rubber are hydrogenated, the acrylonitrile-butadiene rubber (NBR) used herein should be discriminated from the above hydrogenated nitrile rubber (HNBR).

It should be noted that the rubber composition used in the present invention does not contain, as a rubber component, non-diene rubbers including butyl rubber (IIR), ethylene-propylene rubbers (EPM and EPDM), urethane rubber (U), silicone rubber (Q), chlorosulfonated polyethylene (CSM), chlorinated polyethylene (CM), epichlorohydrin rubbers (CO and ECO), acrylic rubber (ACM), and fluorine rubber (FKM).

When natural rubber is used as a main component, the ratio of natural rubber in the rubber component of the rubber composition is at least 60 % by weight, preferably at least 80 % by weight, more preferably at least 90 % by weight, and most preferably 100 % by weight, from the standpoint of strength characteristics and durability.

When a blend of natural rubber and a diene rubber is used as a main component, a formulation weight ratio (A)/(B) between natural rubber (A) and the diene rubber (B) is from 90/10 to 40/60, preferably from 80/20 to 50/50, more preferably from 70/30 to 60/40. The total weight ratio of (A) and (B) in the rubber component of the rubber composition is at least 60 % by weight, preferably at least 80 % by weight, more preferably at least 90 % by weight, and most preferably 100 % by weight, from the standpoint of strength characteristics and durability.

In the practice of the present invention, sulfur can be used as one of vulcanizing agents. The total amount of sulfur is preferably from 0.1 to 5 parts by weight, more preferably from 0.3 to 3.0 parts by weight, and further more preferably from 0.4 to 2.0 parts by weight, per 100 parts by weight of the rubber component.

In the present invention, a bismaleimide is used as one of vulcanizing agents. Although a known bismaleimide can be used and is not specifically limited in type, there can be favorably adopted a bismaleimide represented by the following structural formula.

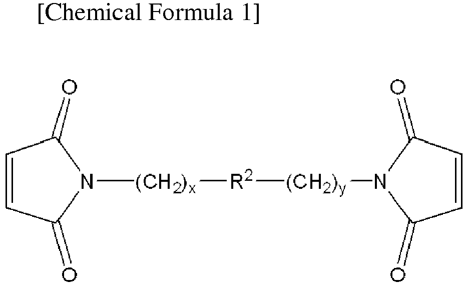

In the above formula, letter x and letter y are independently an integer of 0 to 20, preferably an integer of 0 to 10. R² represents an aromatic group having 5 to 18 carbon atoms or an aromatic group having an alkyl group and 7 to 24 carbon atoms. Specific ones are those aromatic groups having the following structures. It will be noted that although two bonds are not indicated in the following structures, a divalent group is formed with two bonds extending from arbitrarily selected two carbon atoms in the respective structures.

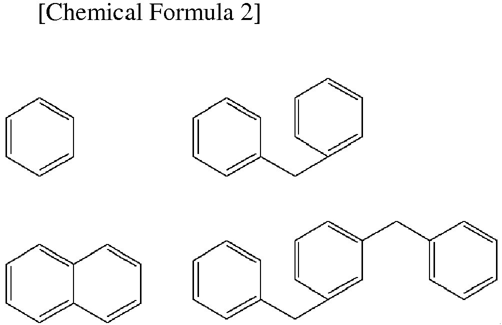

Specific examples of the bismaleimide represented by the above structural formulas include N,N'-o-phenylene bismaleimide, N,N'-m-phenylene bismaleimide, N,N'-p-phenylene bismaleimide, 4,4'-methane bis(N-phenylmaleimide), 2,2-bis-[4-(4-maleimidephenoxy)phenyl]propane, and bis(3-ethyl-5-methyl-4-maleimidephenyl)methane. In the present invention, N,N'-m-phenylene bismaleimide and 4,4'-methane bis(N-phenylmaleimide) can be preferably used.

It will be noted that the above bismaleimides can be used singly or in combination of at least two kinds. The amount of the bismaleimide is preferably from 0.2 to 10 parts by weight, more preferably from 0.3 to 5.0 parts by weight, further more preferably from 0.4 to 3.0 parts by weight, and most preferably from 0.5 to 2.0 parts by weight, per 100 parts by weight of the diene rubber. When the amount of the bismaleimide is at least 0.2 parts by weight, the physical properties of the vibration-absorbing rubber such as the heat resistance and compression set can be improved. On the other hand, when the amount of the bismaleimide is not larger than 10 parts by weight, tensile physical properties (elongation and strength) and durability of the rubber can be improved.

In the practice of the present invention, a dithiocarbamic acid metal salt should be formulated. In particular, the dithiocarbamic acid metal salt indicated by the following formula is formulated. In other words, in the present invention, when a specific type of dithiocarbamic acid metal salt indicated below and the above-described bismaleimide are used in combination, not only a good hardness change and compression set properties of the vibration-absorbing rubber are obtained, but also a good heat resistance of the rubber can be obtained.

The dithiocarbamic acid metal salt includes, for example, one having the following chemical structure.

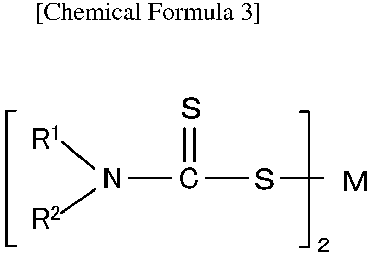

In the above formula, R¹ and R² may be the same or different and either one thereof has a benzene ring. The other one of R¹ and R² having no ring structure is a substituent including a chain alkyl group such as a methyl group, an ethyl group, an n-propyl group, an isopropyl group, an n-butyl group, an isobutyl group, a sec-butyl group, a t-butyl group, an n-pentyl group, an isopentyl group, a 2-methylbutyl group, a 1-methylbutyl group, an n-hexyl group, an isohexyl group, a 3-methylpentyl group, a 2-methylpentyl group, a 1-methylpentyl group, a heptyl group, an octyl group, an isooctyl group, or a 2-ethylhexyl group although not limited thereto.

The metal salt (M) in the above formula includes zinc (Zn²⁺), copper (Cu²⁺), iron (Fe²⁺), and tellurium (Te²⁺).

Specific examples of the dithiocarbamic acid metal salt include dibenzyldithiocarbamic acid zinc salt and N-ethyl-N-phenyldithiocarbamic acid zinc salt.

The above dibenzyldithiocarbamic acid zinc salt has the following chemical formula and is exemplified, for example, by "Nocceler ZTC" manufactured by Ouchi Shinko Chemical Industrial Co., Ltd.

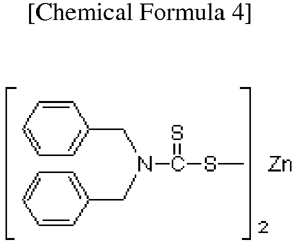

The above N-ethyl-N-phenyldithiocarbamic acid zinc salt has the following chemical formula and is exemplified, for example, by "Nocceler PX" manufactured by Ouchi Shinko Chemical Industrial Co., Ltd.

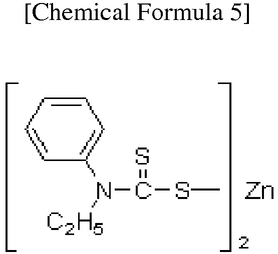

Although not specifically limited, the amount of the dithiocarbamic acid metal salt is preferably from 0.2 to 5.0 parts by weight, more preferably from 0.3 to 3.0 parts by weight, and further more preferably from 0.5 to 2.0 parts by weight, per 100 parts by weight of the rubber component from the standpoint of improving the heat resistance, compression set, tensile physical properties (elongation and strength), and dynamic magnification of the vibration-absorbing rubber.

In the present invention, a vulcanization accelerator may be used within a range not impeding the effect of the present invention. The type of the vulcanization accelerator is not specifically limited and mention is made of benzothiazole vulcanization accelerators such as 2-mercaptobenzothiazole, dibenzothiazyl disulfide, N-cyclohexyl-2-benzothiazyl sulfenamide, N-t-butyl-2-benzothiazyl sulfenamide, and N-t-butyl-2-benzothiazyl sulfenamide; guanidine vulcanization accelerators such as diphenylguanidine; and thiuram vulcanization accelerators such as tetramethylthiuram disulfide, tetrabutylthiuram disulfide, tetradodecylthiuram disulfide, tetraoctylthiuram disulfide, and tetrabenzylthiuram disulfide.

Known carbon blacks can be used and are not specifically limited in type. Illustrative examples of carbon blacks include SRF, GPF, FEF, HAF, ISAF, SAF, FT, and MT. In the practice of the present invention, FEF can be preferably used. These carbon blacks may be used singly or in combination of at least two kinds. The amount of the carbon black is generally from 5 to 80 parts by weight, preferably from 10 to 60 parts by weight, and more preferably from 20 to 45 parts by weight, per 100 parts by weight of the rubber component in view of workability.

In the present invention, a vulcanization accelerator aid such as zinc flower (ZnO) or a fatty acid may be formulated from the standpoint accelerating vulcanization. The fatty acid may be any of saturated or unsaturated, or linear or branched fatty acids. The number of carbon atoms of the fatty acid is not specifically limited. There may be used fatty acids having 1 to 30 carbon atoms, preferably 15 to 30 carbon atoms. More particularly, illustrative examples of fatty acids include naphthenic acids such as cyclohexanoic acid (cyclohexanecarboxylic acid) and an alkylcyclopentane having a side chain, saturated fatty acids such as hexanoic acid, octanoic acid, decanoic acid (including a branched carboxylic acid such as neodecanoic acid), dodecanoic acid, tetradecanoic acid, hexadecanoic acid, and octadecanoic acid (stearic acid), unsaturated fatty acids such as methacrylic acid, oleic acid, linoleic acid, and linolenic, and resin acids such as rosin, toll oil fatty acid, and abietic acid. These may be used singly or in combination of at least two kinds. In the practice of the present invention, zinc flower and stearic acid can be preferably used. The amount of these aids is preferably from 0.1 to 10 parts by weight and more preferably from 0.3 to 5 parts by weight, per 100 parts by weight of the rubber component from the viewpoint of improving workability, low dynamic magnification, and vulcanization retardance of the vibration-absorbing rubber.

An antioxidant used may be known ones and is not specifically limited. Illustrative examples of antioxidants include phenolic antioxidants, imidazole antioxidants, and amine antioxidants. The amount of these antioxidants is preferably from 0.1 to 10 parts by weight and more preferably from 0.3 to 5 parts by weight, per 100 parts by weight of the rubber component.

An oil used may be known ones and is not specifically limited. Specifically, there can be used process oils such as an aromatic oil, a naphthene oil, and a paraffin oil, plant oils such as a palm oil, synthetic oils such as an alkylbenzene oil, and a castor oil. In the practice of the present invention, the naphthene oil can be preferably used. These may be used singly or in combination of at least two kinds. The amount of the oil is not specifically limited and is preferably from 0.1 to 30 parts by weight and more preferably from 1 to 20 parts by weight, per 100 parts by weight of the rubber component from the standpoint of kneading workability. It will be noted that when an extended oil is used as the rubber component, a total amount of the oil contained in the extended rubber and an oil separately added during mixing may be within the above range.

Besides, additives ordinarily employed in the rubber industry within ranges not impeding effect of the present invention may be formulated, if necessary. Such additives include waxes, antioxidants, fillers, foaming agents, plasticizers, lubricants, tackifiers, petroleum resins, ultraviolet absorbers, dispersants, compatibilizers, and homogenizers.

When the rubber composition is obtained, no limitation is placed on the manner of formulating the respective components. All the starting materials may be formulated and kneaded at a time, or the components may be formulated and kneaded separately in two or three stages. It will be noted that a kneader such as rolls, an internal mixer, or a Barbury mixer can be used for kneading. Moreover, a known molding machine such as an extrusion molding machine or a press molding machine can be used for molding into a sheet or a ribbon.

Although the vulcanization conditions for curing the rubber composition are not specifically limited, there can generally be adopted vulcanization conditions of from 140°C to 180°C and from 5 to 120 minutes.

The vibration-absorbing rubber is obtained by vulcanizing the above-described rubber composition and is used for a variety of vibration-absorbing members. The vibration-absorbing member includes the above rubber composition, a metal, and an adhesive as constituent elements and can be obtained by thermal pressing of an unvulcanized rubber composition and the metal through the adhesive thereby bonding the resulting vulcanized rubber and the metal simultaneously with the vulcanization of the above rubber composition. If necessary, the vibration-absorbing member may further include a resin as a constituent element. In this case, the vibration-absorbing member is so configured that adhesives are individually provided between the vulcanized rubber and the metal and also between the vulcanized rubber and the resin. These vibration-absorbing members are conveniently used at sites where high temperatures occur such as torsional dampers, engine mounts, and muffler hangers of automobiles although not limited thereto.

When applied to as a vibration-absorbing rubber of a vibration-absorbing member such as of a torsional damper, an engine mount, or a muffler hanger of automobiles, the vibration-absorbing rubber may preferably have a hardness (Hd) of at least 30 and more preferably from 30 to 70, when determined according to Japanese Industrial Standards (JIS) K 6253 (Type A). The dynamic magnification (Kd/Ks) of the vibration-absorbing rubber may be preferably from 1.10 to 1.50 as a value determined according to JIS K 6385.

### EXAMPLES

Examples and Comparative Examples are depicted below to particularly describe the present invention, which should not be construed as limited to the following Examples.

### [Examples 1 to 7 and Comparative Examples I to VI]

The respective vibration-absorbing rubber compositions of Examples 1 to 7 and Comparative Examples I to VI having formulations indicated in the following Table 1 were kneaded, shaped into a given form and cured by vulcanization under given conditions to obtain molded products. The resulting molded products were used as evaluation samples for the vibration-absorbing rubbers in the present invention. The thus obtained molded products were subjected to measurement and evaluation of hardness (Hd), tensile elongation (Eb), tensile strength (Tb), tensile stress (Md 100), heat resistance (thermal aging test), compression set (CS), and dynamic magnification (Kd/Ks) in conformity with the following JIS standards. The static spring constant (Ks) and the static spring variation after the thermal aging were measured and evaluated according to the following test content. The results are also depicted in Table 1.

### [Hardness (Hd)]

Conformed to JIS K 6253 (type A).

### [Tensile elongation (Eb)]

Conformed to JIS K 6251.

### [Tensile strength (Tb)]

Conformed to JIS K 6251.

### [Tensile stress (Md 100)]

A stress (Md 100) at an elongation of 100 % was determined conformed to JIS K 6251.

### [Heat resistance (thermal aging test)]

Based on JIS K 6257, the respective test pieces were subjected to thermal aging under conditions of 100°C and 96 hours and allowed to stand, and the above tensile elongation (Eb), tensile strength (Tb), and tensile stress (Md 100) were individually measured, and variation rates thereof were determined. The definition of the variation rate is such that ratios of the respective physical values of the test pieces after the thermal aging to the respective physical values of the test piece prior to the thermal aging. For instance, the retention rate of the tensile elongation (Eb) is indicated by (Eb after thermal aging)/(Eb prior to thermal aging). A retention rate closer to 1 means a less change caused by the thermal change, indicating that the heat resistance is excellent.

### [Compression set]

The compression set test was performed under heating temperature conditions of 100°C and 72 hours in conformity with JIS K 6262.

### [Static spring constant (Ks), Dynamic spring constant (Kd), and Dynamic magnification (Kd/Ks)]

According to JIS K 6385, Kd was measured at 100 Hz. For the evaluation of the static spring constant (Ks) and the dynamic magnification (Kd/Ks), a columnar sample having 30 mm in diameter × 30 mm in height was made.

### [Static spring constant (Ks) after thermal aging and Static spring variation rate]

The respective test pieces were placed under heating temperature conditions of 100°C and 250 hours and allowed to stand, followed by measurement of the static spring constant (Ks). The definition of the variation rate of the static spring constant is such that it means a ratio of the respective physical values of the test piece after the thermal aging to the respective physical values of the test piece prior to the thermal aging and is thus Ks after the thermal aging/Kd prior to the thermal aging. A variation rate closer to 1 means a less change caused by the thermal aging, indicating that the heat resistance is excellent.

The details of the above formulations are just as indicated below.

### Rubber component

Natural rubber (NR): "RSS #4"
Butadiene rubber: "BR01" manufactured by JSR Corporation

### Carbon black

"Asahi #65" manufactured by Asahi Carbon Co., Ltd.

### Stearic acid

"Stearic acid 50S" manufactured by New Japan Chemical Co., Ltd.

### Zinc flower

"No. 3 Zinc Flower" manufactured by Hakusui Tech Co., Ltd.

### Wax (WAX)

"Suntight S" manufactured by Seiko Chemical Co., Ltd.

### Antioxidant: 6C

N-phenyl-N'-(1,3-dimethylbutyl)-p-phenylene diamine "Nocrac NS-6" manufactured by Ouchi Shinko Chemical Industrial Co., Ltd.

### Naphthene oil

"Sunthene 4240" manufactured by Sun Refining and Marketing Company

### Sulfur

"Powdery Sulfur" manufactured by Tsurumi Chemical Industry Co., Ltd.

### Bismaleimide

N,N'-m-phenylbismaleimide "Vulnoc PM" manufactured by Ouchi Shinko Chemical Industrial Co., Ltd.

### Vulcanization accelerator TT

"Accel TMT-PO" manufactured by Kawaguchi Chemical Industry CO., Ltd.

### Vulcanization accelerator CZ

"Nocceler CZ-G" manufactured by Ouchi Shinko Chemical Industrial Co., Ltd.

### Dithiocarbamic acid metal salt PZ

"Nocceler PZ" manufactured by Ouchi Shinko Chemical Industrial Co., Ltd.

### Dithiocarbamic acid metal salt BZ

"Nocceler BZ" manufactured by Ouchi Shinko Chemical Industrial Co., Ltd.

### Dithiocarbamic acid metal salt PX

"Nocceler PX" manufactured by Ouchi Shinko Chemical Industrial Co., Ltd.

### Dithiocarbamic acid metal salt ZTC

"Nocceler ZTC" manufactured by Ouchi Shinko Chemical Industrial Co., Ltd.

### Dithiocarbamic acid metal salt ZP

"Nocceler ZP" manufactured by Ouchi Shinko Chemical Industrial Co., Ltd.

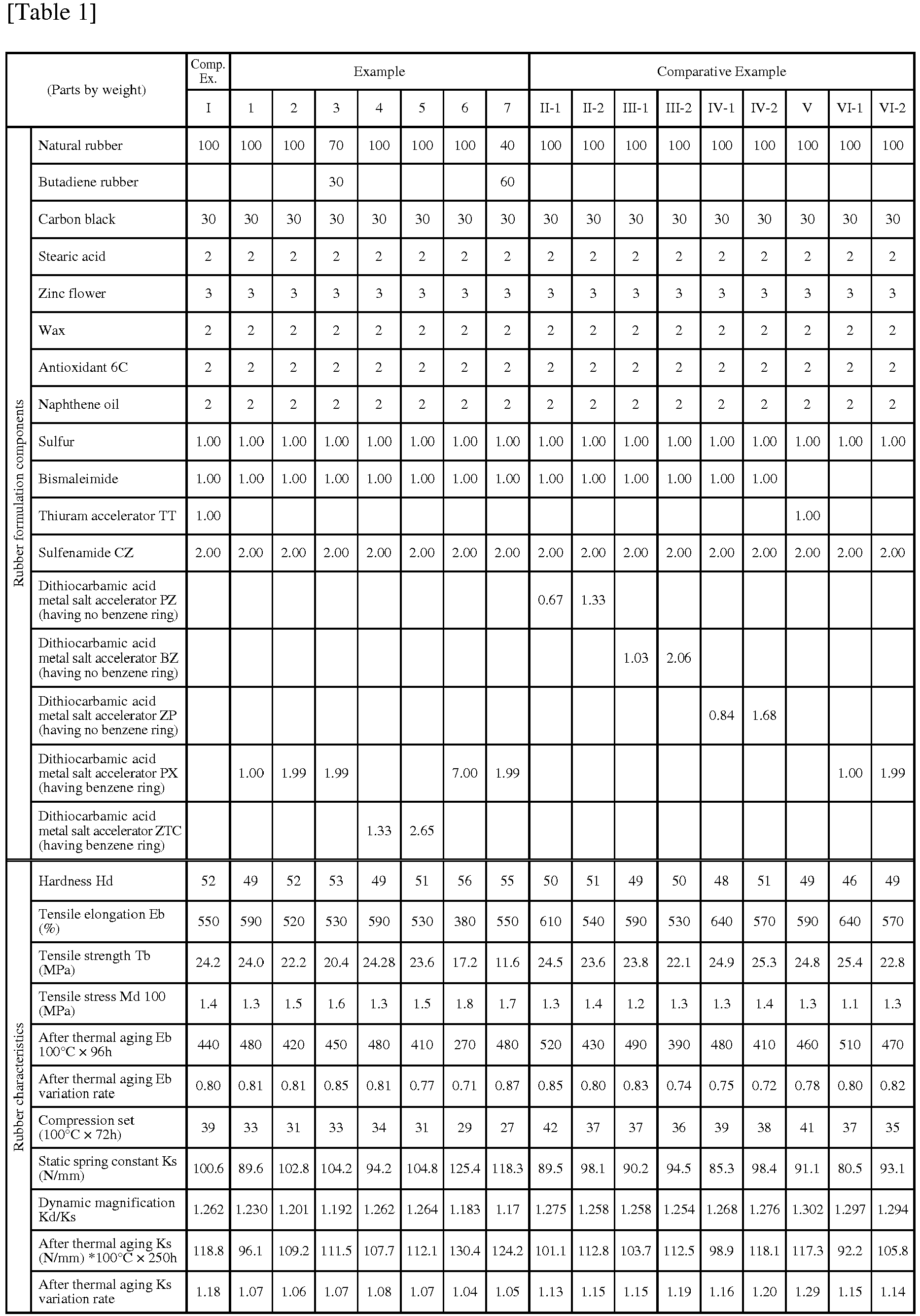

The following will be seen from the results of Table 1.

When compared with the respective Comparative Examples, Examples 1 to 7 ensure a low dynamic magnification and a good vibration-absorbing performance along with a small variation rate of static spring after the thermal aging, a good heat resistance, and a low compression set.

In contrast thereto, Comparative Example I is such that the static spring variation rate after the thermal aging is large and the heat resistance is worsened along with a large compression set and a large dynamic magnification.

Comparative Examples II are such that the static spring variation rate after the thermal aging is large and the heat resistance is worsened along with a large compression set and a large dynamic magnification.

Comparative Examples III are such that the static spring variation rate after the thermal aging is large and the heat resistance is worsened along with a large compression set and a large dynamic magnification. Additionally, Comparative Example III-2 is such that the tensile elongation (Eb) after the thermal aging becomes small and the heat resistance is poor.

Comparative Examples IV are such that the static spring variation rate after the thermal aging is large and the heat resistance is worsened along with a large compression set and a large dynamic magnification. Additionally, Comparative Examples IV are small in the tensile elongation (Eb) after the thermal aging and is poor in the heat resistance.

Comparative Example V is such that the static spring variation rate after the thermal aging is large and the heat resistance is worsened along with a very large compression set and a large dynamic magnification.

Comparative Examples VI are such that the static spring variation rate after the thermal aging is large and the heat resistance is worsened along with a large compression set and a large dynamic magnification.

## Claims

1. A vibration-absorbing member, **characterized by** including a rubber composition, a metal, and an adhesive as constituent elements, wherein the rubber composition comprises a rubber component containing, as a main component, natural rubber or a blend of natural rubber and a diene synthetic rubber, a bismaleimide, and a dithiocarbamic acid metal salt having a benzene ring.

2. The vibration-absorbing member of claim 1, wherein the rubber component is entirely made of natural rubber.

3. The vibration-absorbing member of claim 1, wherein the blend of natural rubber and a diene synthetic rubber is used as a main component and a formulation weight ratio (A)/(B) of the natural rubber (A) and the diene synthetic rubber (B) is from 90/10 to 40/60.

4. The vibration-absorbing member of claim 1, 2, or 3, wherein the dithiocarbamic acid metal salt having a benzene ring is a dibenzyldithiocarbamic acid zinc salt or an N-ethyl-N-phenyldithiocarbamic acid zinc salt.

5. The vibration-absorbing member of any one of claims 1 to 4, wherein an amount of the bismaleimide is from 0.2 to 10 parts by weight per 100 parts by weight of the rubber component.

6. The vibration-absorbing member of any one of claims 1 to 5, wherein an amount of the dithiocarbamic acid metal salt is from 0.2 to 5 parts by weight per 100 parts by weight of the rubber component.

7. The vibration-absorbing member of any one of claims 1 to 6, further comprising sulfur in the vibration-absorbing rubber composition.

8. The vibration-absorbing member of any one of claims 1 to 7, wherein an amount of the dithiocarbamic acid metal salt is from 0.5 to 2.0 parts by weight per 100 parts by weight of the rubber component.

## Patentansprüche

1. Vibrationsdämpfendes Element, **dadurch gekennzeichnet, dass** es eine Kautschukzusammensetzung, ein Metall und einen Klebstoff als Bestandteile beinhaltet, wobei die Kautschukzusammensetzung Folgendes umfasst: eine Kautschukkomponente, die als Hauptkomponente Naturkautschuk oder eine Mischung aus Naturkautschuk und einem synthetischen Dienkautschuk, ein Bismaleimid und ein Dithiocarbaminsäuremetallsalz mit einem Benzolring enthält.

2. Vibrationsdämpfendes Element nach Anspruch 1, worin die Kautschukkomponente vollständig aus Naturkautschuk besteht.

3. Vibrationsdämpfendes Element nach Anspruch 1, worin die Mischung aus Naturkautschuk und einem synthetischen Dienkautschuk als Hauptkomponente verwendet wird und ein Formulierungsgewichtsverhältnis (A)/(B) des Naturkautschuks (A) und des synthetischen Dienkautschuks (B) von 90/10 bis 40/60 beträgt.

4. Vibrationsdämpfendes Element nach Anspruch 1, 2 oder 3, worin das Dithiocarbaminsäure-Metallsalz mit einem Benzolring ein Dibenzyldithiocarbaminsäure-Zinksalz oder ein N-Ethyl-N-phenyldithiocarbaminsäure-Zinksalz ist.

5. Vibrationsdämpfendes Element nach einem der Ansprüche 1 bis 4, worin eine Menge des Bismaleimids 0,2 bis 10 Gewichtsteile pro 100 Gewichtsteile der Kautschukkomponente beträgt.

6. Vibrationsdämpfendes Element nach einem der Ansprüche 1 bis 5, worin eine Menge des Dithiocarbaminsäure-Metallsalzes 0,2 bis 5 Gewichtsteile pro 100 Gewichtsteile der Kautschukkomponente beträgt.

7. Vibrationsdämpfendes Element nach einem der Ansprüche 1 bis 6, ferner umfassend Schwefel in der vibrationsdämpfenden Kautschukzusammensetzung.

8. Vibrationsdämpfendes Element nach einem der Ansprüche 1 bis 7, worin eine Menge des Dithiocarbaminsäure-Metallsalzes 0,5 bis 2,0 Gewichtsteile pro 100 Gewichtsteile der Kautschukkomponente beträgt.

## Revendications

1. Elément absorbant les vibrations, **caractérisé en ce qu'**il inclut une composition de caoutchouc, un métal et un adhésif en tant qu'éléments constituants, dans lequel la composition de caoutchouc comprend un composant de caoutchouc contenant comme composant principal du caoutchouc naturel ou un mélange de caoutchouc naturel et d'un caoutchouc synthétique diénique, un bismaléimide et un sel métallique d'acide dithiocarbamique ayant un cycle benzène.

2. Elément absorbant les vibrations selon la revendication 1, dans lequel le composant de caoutchouc est entièrement en caoutchouc naturel.

3. Elément absorbant les vibrations selon la revendication 1, dans lequel le mélange de caoutchouc naturel et d'un caoutchouc synthétique diénique est utilisé en tant que composant principal et un rapport pondéral de formulation (A)/(B) du caoutchouc naturel (A) et du caoutchouc synthétique diénique (B) va de 90/10 à 40/60.

4. Elément absorbant les vibrations selon les revendications 1, 2 ou 3, dans lequel le sel métallique d'acide dithiocarbamique ayant un cycle benzène est un sel de zinc d'acide dibenzyldithiocarbamique ou un sel de zinc d'acide N-éthyl-N-phényldithiocarbamique.

5. Elément absorbant les vibrations selon l'une quelconque des revendications 1 à 4, dans lequel une quantité de bismaléimide représente 0,2 à 10 parties en poids pour 100 parties en poids du composant caoutchouc.

6. Elément absorbant les vibrations selon l'une quelconque des revendications 1 à 5, dans lequel une quantité de sel métallique d'acide dithiocarbamique se situe entre 0,2 et 5 parties en poids pour 100 parties en poids du composant en caoutchouc.

7. Elément absorbant les vibrations selon l'une quelconque des revendications 1 à 6, comprenant en outre du soufre dans la composition de caoutchouc absorbant les vibrations.

8. Elément absorbant les vibrations selon l'une quelconque des revendications 1 à 7, dans lequel une quantité de sel métallique d'acide dithiocarbamique varie de 0,5 à 2,0 parties en poids pour 100 parties en poids du composant caoutchouc.
